# FASCICULE DE BREVET EUROPEEN

(11) **EP 0 442 827 B1**
(45) Date de publication et mention de la délivrance du brevet: **04.05.1994**
(21) Numéro de dépôt: 91420040.7
(22) Date de dépôt: 06.02.1991
(51) Int. Cl.: B60S 5/04

(54) **Robinet distributeur pour appareil de gonflage et dégonflage de pneumatiques**
Verteilerhahn für Luftaufpump- und Ablassgerät für Reifen
Distribution tap for tyre inflating and deflating apparatus

(30) Priorité: 12.02.1990 FR 9001855
(43) Date de publication de la demande: 21.08.1991
(73) Titulaire: SCHRADER S.A., F-25300 Pontarlier (FR)
(72) Inventeur: Desgrange, Jean-Marie, F-25300 Pontarlier (FR)
(74) Mandataire: Moinas, Michel

(56) Documents cités:
- EP-A- 0 008 747
- CH-A- 340 422
- CH-A- 450 185
- FR-A- 714 655
- US-A- 1 666 861
- US-A- 2 989 989
- G. Marie, "L'hydraulique pratique commentée", 1982, CEP Edition, Paris

## Description

La présente invention est relative à un robinet distributeur dans un appareil de gonflage de pneumatiques de véhicule permettant, à volonté, d'apporter au pneumatique de l'air sous pression d'une source d'air comprimé pour le gonfler, ou de laisser échapper de l'air du pneumatique pour le dégonfler, puis de lire la pression interne du pneumatique grâce à un manomètre associé.

Les simples pistolets de gonflage comprennent ainsi une vanne actionnée par une manette pour autoriser le passage de l'air comprimé venant d'une source, c'est-à-dire compresseur ou réservoir, laquelle vanne est associée à une liaison au pneumatique, à un clapet d'échappement et à un manomètre.

Des appareils plus élaborés permettent soit de regrouper les commandes de gonflage et de dégonflage sous un seul bouton que l'on enfonce plus ou moins, soit d'isoler temporairement le manomètre pendant l'une et/ou l'autre opération. De tels robinets distributeurs, comme celui illustré par l'exposé EP-A-0 008 747, correspondant au préambule de la revendication 1, présentent usuellement une chambre centrale dans laquelle arrive un conduit 3 d'air comprimé fermé par une soupape 9 faisant office de vanne. De cette chambre partent également un conduit 5 vers le pneu et un autre conduit 8 vers le manomètre ainsi qu'un échappement à l'air libre contrôlé par un clapet 13. Ces robinets distributeurs comprennent alors de plus des moyens mécaniques, en l'occurrence dans celui de l'exposé EP-A-0 008 747 un axe interne 18 et des boutons 24,28, permettant d'agir à volonté au sein de la chambre centrale sur la soupape ou le clapet et d'isoler le manomètre lors du gonflage.

Un premier inconvénient des robinets distributeurs cités précédemment est que leurs parties mobiles : axe, vanne, soupape ou clapet, doivent être déplacées contre une pression régnante : celle du pneu ou de la source d'air comprimé. L'opérateur doit donc appliquer un effort réel sur l'organe de commande des parties mobiles aussi bien pour enclencher que pour maintenir l'opération. Quand bien même on emploie une manette pour démultiplier l'effort sur l'organe de commande, il en résulte rapidement une certaine fatigue pour l'opérateur et également une imprécision quant au moment de démarrage et d'arrêt. Un second inconvénient vient du fait que, pendant les opérations, le manomètre peut être laissé en un état indéterminé. Par exemple, dans le robinet distributeur selon l'exposé EP-A-0 008 747, le manomètre reste à l'ancienne pression du pneumatique pendant une opération de gonflage et passe par une dépression lors d'une opération de dégonflage due au fort débit d'air s'échappant du distributeur et vue par ce manomètre.

Le but de la présente invention est un robinet distributeur pour appareil de gonflage et de dégonflage de pneumatiques qui soit plus confortable d'utilisation, c'est-à-dire dont les efforts à exercer sur les organes de commande des parties mobiles pour gonfler ou dégonfler sont indépendants de la pression de la source d'air comprimé et/ou de la pression du pneu. Ce robinet distributeur doit de plus pouvoir mettre systématiquement le manomètre à la pression atmosphérique lors d'une opération de gonflage ou dégonflage pour réduire les effets d'hystérésis entre les mesures successives et également pour permettre des recalibrations automatiques des manomètres électroniques.

Ces buts sont atteints grâce à un robinet distributeur pour appareil de gonflage et de dégonflage de pneumatiques selon la revendication 1.

Selon un premier mode de réalisation avantageux, les diamètres des trois pistons sont identiques et la face externe du premier piston est également à la pression atmosphérique. Alors, les moyens de déplacement du tiroir principal en position "ouverte" sont constitués d'une tige prolongeant la face externe du troisième piston, et les moyens de rappel du tiroir en position "fermée" comprennent un ressort agissant entre le fond de la chambre et la face externe du premier piston. L'égalité des diamètres des pistons permet d'éliminer toute influence de la pression du pneumatique et de la pression de la source d'air comprimé sur le comportement du tiroir principal, donc permet la commande directe du tiroir principal avec une faible puissance indépendante.

Selon un second mode de réalisation avantageux le premier piston et sa partie de siège cylindrique correspondante de la chambre sont plus larges que le troisième piston et sa partie de siège cylindrique correspondante. Alors, les moyens de déplacement en position "ouverte" et de rappel en position "fermée" du tiroir principal comprennent un tiroir de distribution actionné grâce à un organe de commande contre un moyen de rappel et appliquant sur la face externe du premier piston au travers d'un conduit interne soit, au repos, la pression de la source d'air comprimé pour maintenir le tiroir principal en position "fermée"; soit, actionné, la pression atmosphérique pour provoquer une levée du tiroir principal en une position "ouverte". Cette caractéristique permet la commande à distance du tiroir principal au moyen d'un tiroir de distribution pour le gonflage dont l'actionnement des organes de commande contre des moyens de rappel nécessite une faible puissance indépendante de la pression du réseau. De façon avantageuse, les surfaces des second piston intermédiaire et troisième piston en aval, qui sont soumis à la pression du pneumatique, sont sensiblement égales afin de limiter l'influence de cette pression du pneumatique sur le comportement du tiroir principal.

Avantageusement, un troisième conduit vers un manomètre et un quatrième conduit d'échappement à la pression atmosphérique normalement fermé par des seconds moyens mécaniques peuvent avoir une partie commune allant de la chambre jusqu'aux seconds moyens mécaniques, et ces seconds moyens mécaniques peuvent comprendre un tiroir de distribution pour le dégonflage actionné grâce à un organe de commande contre un moyen de rappel qui, au repos, relie la partie commune au conduit du manomètre complétant ainsi le troisième conduit, et qui, actionné, isole et met séparément à la pression atmosphérique le conduit du manomètre et la partie commune en tant que quatrième conduit d'échappement. De la même façon que pour les moyens de gonflage, la puissance nécessaire à l'actionnement des organes de commandes pour le dégonflage reste faible et indépendante de la pression du pneumatique. Utilement, dans le cas d'une commande de gonflage à distance du tiroir principal, les deux tiroirs de distribution pour le gonflage et le dégonflage sont identiques.

L'invention sera mieux comprise à l'étude de modes de réalisations pris à titre nullement limitatifs et décrits par les dessins annexés, dans lesquels :
- les figures 1a à 1c sont trois schémas de principe d'un premier mode de réalisation du robinet distributeur par commande directe respectivement au repos et mesure, lors du gonflage et lors du dégonflage,
- la figure 2 est une vue de dessus d'une réalisation pratique du robinet distributeur selon la figure 1,
- les figures 3a et 3b sont des vues en coupe verticale du robinet distributeur selon les plans A et B de la figure 2,
- les figures 4a à 4c sont trois schémas de principe d'un second mode de réalisation du robinet distributeur par commande à distance respectivement au repos et mesure, lors du gonflage et lors du dégonflage,
- la figure 5 est une vue en perspective d'une réalisation pratique du robinet distributeur selon les figures 4,
- la figure 6 est une vue du dessus du robinet de la figure 5,
- les figures 7a à 7c sont des vues en coupe verticale selon les plans A, B et C de la figure 6, et
- la figure 8 est une vue verticale du circuit pneumatique de liaison du distributeur selon la figure 6.

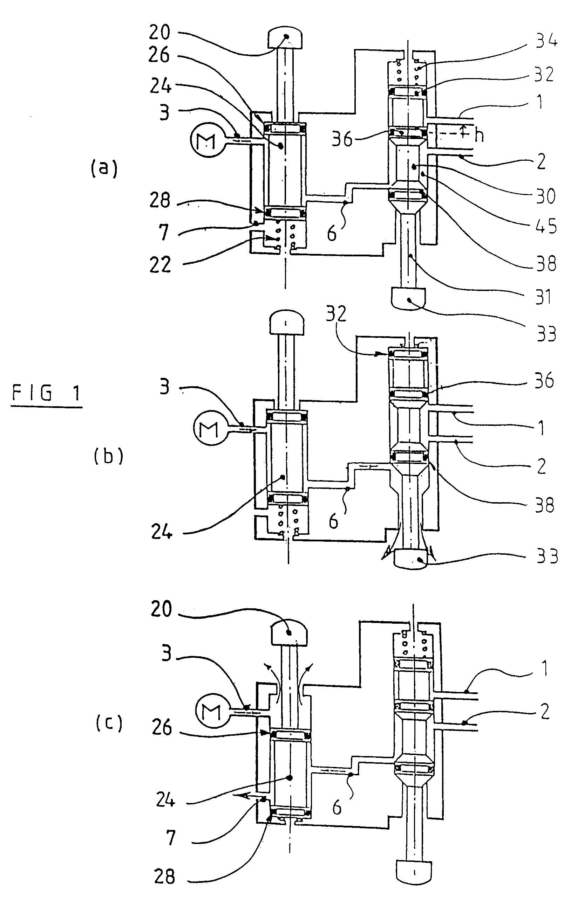

En référence à la figure 1a, le robinet distributeur à commande directe est relié au réseau d'air comprimé par un conduit 1, au pneumatique par un conduit 2 et à un manomètre par un conduit 3. Une chambre interne 45 cylindrique de section circulaire constante constitue, dans le robinet distributeur, le siège pour un tiroir principal 30 comportant trois pistons de diamètre identique 32, 36 et 38 chacun muni d'un joint d'étanchéité en contact avec la chambre 45.

Tel qu'illustré sur cette figure 1a, ce tiroir principal 30 est, à l'état de repos, poussé en une position dite "fermée" par un ressort 34 agissant entre le fond de la chambre 45 et l'extrémité en correspondance du tiroir principal où se situe le premier piston 32. Ce premier fond de la chambre 45 présente un orifice mettant la face externe de ce premier piston 32 à la pression atmosphérique. Le second piston 36 est situé sensiblement au milieu du tiroir 30 alors que le troisième piston 38 est situé à l'extrémité opposée du tiroir, lequel piston 38 repose donc contre le second fond de la chambre 45. Ce second fond de la chambre 45 présente également un orifice vers l'extérieur mettant la face externe du troisième piston 38 à la pression atmosphérique. Cette face externe du troisième piston 38 est de plus prolongée par une tige 31 traversant l'orifice, laquelle tige est terminée un bouton 33 qui est donc accessible de l'extérieur.

Le conduit 1 de la source d'air comprimé débouche dans la chambre 45 entre le premier et le second piston, et plus précisément à une distance h du second piston intermédiaire 36. Le second conduit 2 relié au pneumatique débouche dans la chambre 45 entre le second piston 36 et troisième piston 38, en fait à proximité du second piston 36, qui réalise donc bien ainsi un obturateur entre le premier et le second conduit, donc entre la source d'air comprimé et le pneumatique. En d'autres termes, on peut également considérer que le troisième piston 38 se situe en "aval" du premier conduit 1 venant de la source d'air comprimé. Un troisième conduit 6 quitte la chambre 45 tout près du troisième piston 38 pour être relié au conduit 3 du manomètre au travers d'un tiroir de commande pour le dégonflage 24.

Le tiroir de commande de dégonflage 24 comprend, coulissant dans un siège cylindrique, une barre centrale de diamètre inférieur au siège portant à chaque extrémité un piston supérieur 26 et inférieur 28 avec leurs joints respectifs isolant ainsi ce siège en trois zones distinctes : une zone inférieure, centrale et supérieure. Une tige relie le piston supérieur 26, donc l'extrémité supérieure du tiroir de dégonflage, à un organe de commande 20. La zone inférieure du siège est mise à la pression atmosphérique par un orifice dans le prolongement du tiroir de dégonflage. Un ressort 22 agit entre le piston inférieur 28 et le fond inférieur du siège pour maintenir normalement le tiroir de dégonflage en position haute.

Un conduit 7 part de la zone inférieure du siège, mais proche du piston inférieur 28, et débouche à l'extérieur du robinet distributeur. Le conduit 3 du manomètre M débouche dans la zone centrale du tiroir près du piston supérieur 24. Enfin le conduit 6 part de cette même partie centrale du tiroir de dégonflage 24 et débouche dans la chambre 45, près du piston inférieur 38 du tiroir principal 30. A l'évidence, la seule liaison entre la chambre 45 et le tiroir de dégonflage 24 étant le conduit 6, la disposition entre ces deux éléments mécaniques peut être choisie selon des critères purement esthétiques : boutons de commande 20 et 33 du même côté ou non.

Tel que décrit en relation avec la figure 1a, on comprend que, comme les surfaces en regard des pistons supérieur 32 et intermédiaire 36 soumises à la pression de la source d'air comprimé, ainsi que les surfaces en regard des pistons intermédiaire 36 et inférieur 38 soumises à la pression du pneumatique, sont égales entre elles, seule la force développée par le ressort 34 agit sur le tiroir principal 30 pour le maintenir au repos en position "fermée" soit basse sur la figure 1a. La pression du pneumatique se transmet alors du conduit 2 au conduit 6, au travers de la zone centrale du tiroir de dégonflage, et dans le conduit 3 jusqu'au manomètre M.

Lorsque l'opérateur appuie sur le bouton 33 pour déplacer le tiroir principal dans son siège cylindrique constitué par la chambre 45, il ne doit vaincre que la force du ressort 34 et les forces de friction des joints des trois pistons 32, 36 et 38, mais nullement des forces dues à la pression du réseau d'air comprimé et/ou du pneumatique. Compte-tenu de la proximité de l'embouchure du conduit 6 avec le piston 38 et de l'écartement d'une valeur minimum h du piston intermédiaire 36 avec l'embouchure du conduit 1 de la source d'air comprimé, le déplacement initial du tiroir principal 30 provoque dans un premier temps la mise à la pression atmosphérique du conduit 6, du tiroir 24 (n'ayant pas bougé), du conduit 3 ainsi que du manomètre M. Le manomètre peut alors lire la pression atmosphérique qu'il peut utiliser comme valeur de référence pour une recalibration de zéro. Le déplacement continu du bouton 33, donc du tiroir principal 30, entraîne dans un second temps le passage du piston 36 au dessus du conduit 1, tel qu'illustré sur la figure 1b, permettant alors seulement à l'air comprimé en provenance de la source de passer dans le conduit 2 vers le pneumatique pour le gonfler. Une fois le bouton 33 totalement enfoncé, l'opérateur ne doit plus vaincre pour maintenir le tiroir principal 30 dans sa nouvelle position "ouverte" que la force du ressort 34 comprimé que l'on établit à une valeur faible, mais au moins suffisante pour vaincre les forces de frictions des joints des pistons 32, 36 et 38 lors du retour. Lorsque l'opérateur relâche le bouton 33, le ressort 34 ramène immédiatement le tiroir principal 30 dans sa position "fermée" tel qu'illustré par la figure 1a, et le manomètre lit la nouvelle pression du pneumatique.

Si maintenant l'opérateur appuie seulement sur le bouton 20, donc déplace le tiroir 24 comme illustré sur la figure 1c, le piston supérieur 26 passe d'abord devant l'embouchure du conduit 3 ce qui met à nouveau le manomètre M à la pression atmosphérique pour recalibration éventuelle, puis le piston inférieur 28 met en communication le conduit 7 avec le conduit 6 permettant à l'air comprimé contenu dans le pneumatique de s'échapper en passant par le conduit 2, par la chambre 45, et par les conduits 6 et 7. Comme précédemment la force d'action sur le bouton 20 n'est dépendante que de la force du ressort 22 et des forces de friction des joints de pistons du tiroir 24.

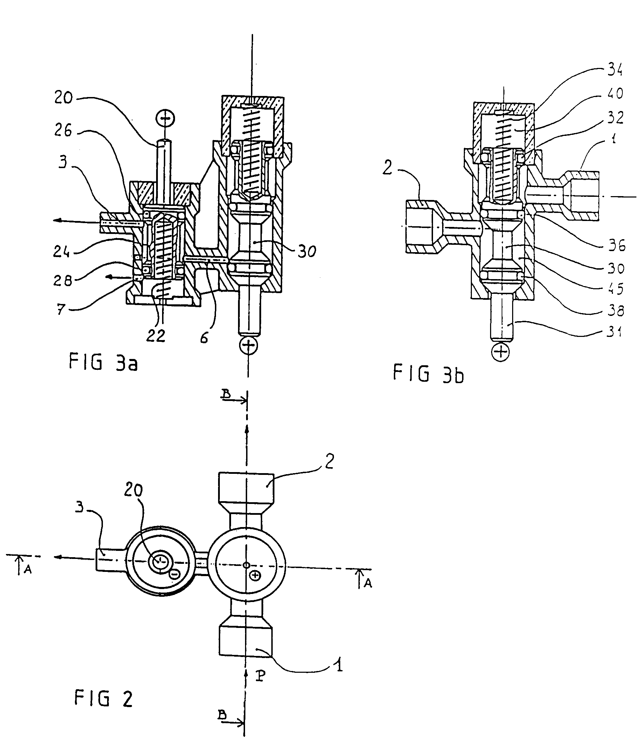

La figure 2 illustre une vue de dessus d'une réalisation pratique du robinet distributeur à commande directe comprenant à droite un boîtier cylindrique contenant la chambre cylindre avec le tiroir principal et d'où partent les sorties des conduits 1 et 2 ; et à gauche le tiroir de dégonflage 24 dont seul le bouton de commande 20 est apparent et d'où part, tout à gauche, la sortie du conduit 3. La figure 3a est une vue en coupe verticale selon le plan A de la figure 2 où l'on peut observer la forme prise concrètement par le tiroir principal 30 et de commande de dégonflage 24 ainsi que l'implantation des conduits 6,7 et 3. La figure 3b est une vue en coupe verticale selon le plan B orthogonal à A de la figure 2 où l'on peut observer l'implantation des conduits 1 et 2.

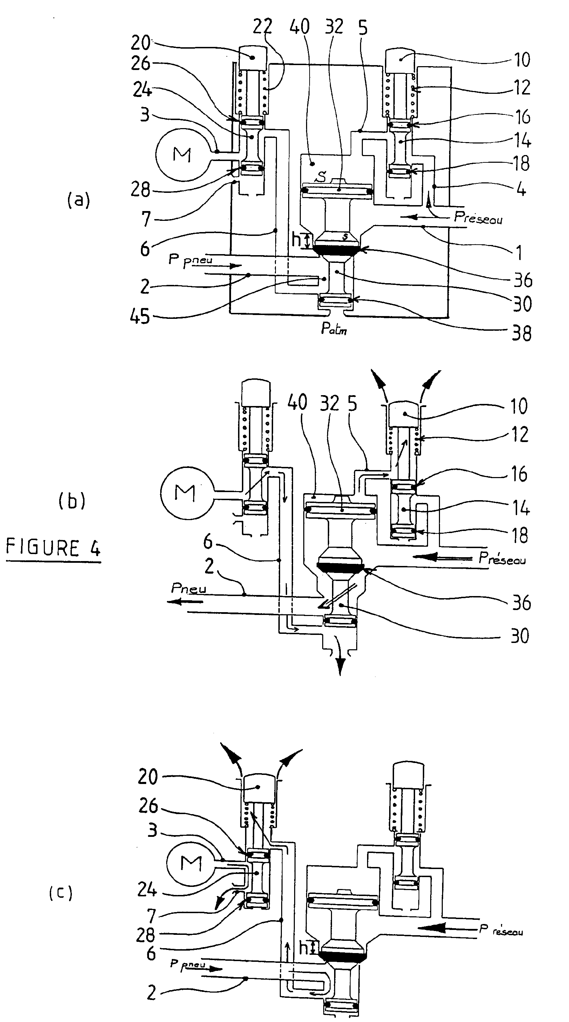

Les figures 4 a,b et c représentent les schémas de principe d'un robinet distributeur à commande indirecte respectivement au repos et lecture de pression, gonflage et dégonflage. Dans ces figures, des références numériques identiques sont utilisées pour désigner des pièces similaires à celles déjà décrites en référence aux figures précédentes. Comme précedemment, le robinet distributeur est relié à une source d'air comprimé par un conduit 1, au pneumatique par un conduit 2 et à un manomètre par un conduit 3.

Dans cette variante, le tiroir distributeur présente aussi une chambre interne 45 cylindrique de section circulaire, avec toutefois comme particularité le fait que la partie supérieure 40 de cette chambre a un diamètre supérieur à celui de la partie inférieure. Dans cette chambre peut coulisser librement entre une position "ouverte" et une position "fermée" un tiroir principal 30 comportant également trois pistons.

Le premier piston 32, à l'extrémité supérieure du tiroir 30, est prévu pour coulisser uniquement dans la partie supérieure 40 plus large de la chambre 45, et son diamètre, avec celui de son joint d'étanchéité, correspond à celui de cette partie supérieure 40. Lorsque le tiroir principal 30 est en position "fermée", donc basse sur la figure 4a, le second piston 36 intermédiaire du tiroir 30 se situe entre l'embouchure du conduit 1 venant de la source d'air comprimé et l'embouchure du conduit 2 partant vers le pneumatique constituant donc bien ainsi un obturateur entre ces deux conduits. Plus précisément, ce second piston 36 intermédiaire se situe, dans cette position "fermée", à une distance minimum h de l'embouchure du conduit 1 qui se situe lui même à l'intersection entre la partie supérieure 40 et inférieure de la chambre 45. Toujours avec le tiroir principal 30 en position "fermée", le troisième piston à l'extrémité inférieure du tiroir principal 30, donc en aval par rapport au conduit 1, vient obturer contre le fond inférieur de la chambre 45. La face externe de ce troisième piston 38 est mise à la pression atmosphérique par un orifice percé dans ce fond inférieur. Les diamètres des second et troisième pistons sont sensiblement identiques correspondant, avec leurs joints respectifs, à celui de la chambre 45, mais sont donc nettement inférieurs à celui du premier piston 32.

Un conduit 6 relie cette même chambre 45 au conduit 3 du manomètre M au travers d'un tiroir de dégonflage 24. Ce conduit 6 débouche dans la chambre 45 tout près du troisième piston 38. Un conduit interne 5 relie l'extrémité de la partie supérieure 40 à un tiroir de gonflage 14 mettant, à volonté, cette partie supérieure 40 et la face externe S du premier piston 32 soit à la pression de la source d'air comprimé, soit à la pression atmosphérique, ce premier piston 32 agissant alors en tant que piston différentiel.

Pour des considérations d'économie lors de la fabrication, les tiroirs de commande 14 et 24 sont de conception identique mais branchés différemment. Chaque tiroir de commande comprend, coulissant dans un siège cylindrique une barre centrale de diamètre inférieur au siège portant à chaque extrémité un piston inférieur et supérieur, par exemple 16 et 18, avec leurs joints respectifs isolant ainsi le siège en trois zones distinctes : une zone inférieure, centrale et supérieure. Une tige relie le piston supérieur 16 à un organe de commande, en l'occurrence un bouton 10. Un ressort 12 agit entre le fond d'un évidemment et le bouton 10 pour maintenir normalement le tiroir en position haute.

Dans le cas du tiroir de commande de gonflage 14, la partie inférieure du siège est mise à la pression atmosphérique par un orifice dans le prolongement du tiroir. Un conduit 4 part du conduit 1 (ou de la partie inférieure de la chambre 45) et débouche dans le siège du tiroir de commande près du piston inférieur 18 ; et un conduit 5 part de l'extrémité de la partie supérieure 40 de la chambre 45 et débouche dans le siège près du piston supérieur 16.

Dans le cas du tiroir de dégonflage 24, la partie inférieure du siège est également mise à la pression atmosphérique par un orifice également dans le prolongement du tiroir. Un conduit 7 part de la partie inférieure du siège proche du piston inférieur 28 et débouche à l'extérieur du robinet distributeur. Le conduit 3 du manomètre M débouche dans la partie centrale du tiroir près du piston inférieur 28. Enfin, un conduit 6 part de cette même partie centrale du tiroir mais proche du piston supérieur 26 et débouche dans la chambre 45 près du troisième piston inférieur 38 du tiroir principal 30.

Tel que décrit en relation avec la figure 4a, on comprend que la pression de la source d'air comprimé passant dans le conduit 4, dans la partie centrale du tiroir 14 et par le conduit 5 se trouve présente dans la partie supérieure 40 de chambre donc sur la surface externe S du premier piston 32 différentiel. Cette même pression de la source d'air comprimé est présente sur la face interne de ce piston différentiel 32 mais n'agit que sur une collerette équivalent à la différence de surface entre la face externe S du piston différentiel 32 et la surface équivalente s de l'épaulement du second piston 36. Compte-tenu que la face externe du troisième piston 38 est à la pression atmosphérique, cette différence de surface portante de part et d'autre du piston différentiel 32 résulte en une force poussant le tiroir 30 vers le bas en sa position "fermée" donc le piston intermédiaire 36 entre les conduits 1 et 2, ce qui isole la partie inférieure de la chambre 45 de la pression de la source d'air comprimé. La pression du pneumatique est alors transmise le long des conduits 2,6 au travers de la partie centrale du tiroir de dégonflage 24 au conduit 3 et au manomètre M.

Lorsque l'opérateur appuie sur le bouton 10 pour déplacer le tiroir de gonflage 14 dans son siège, il ne doit vaincre que la force du ressort 12 comprimé et les forces de friction des joints des pistons 16 et 18, mais là encore nullement une force due à la pression du réseau d'air comprimé. Lorsque le bouton 10 est complètement enfoncé tel qu'illustré sur la figure 4b, le piston supérieur 16 est placé devant l'embouchure du conduit 5 ce qui met immédiatement la partie supérieure 40 de la chambre 45 à la pression atmosphérique. La pression de la source d'air comprimé agissant sous le premier piston différentiel 32 n'étant plus compensée, la force résultante lève le tiroir principal 30 en position "ouverte", ce qui a pour premier effet de faire passer le piston inférieur 38 devant l'embouchure du conduit 6, puis, après avoir fait coulisser le second piston 36 dans la chambre 45 sur la distance h, de l'amener dans la partie supérieure 40 plus large et de dégager l'embouchure du conduit 1. L'air comprimé peut alors passer par le conduit 2 dans le pneu qui gonfle. Le tiroir 24 n'ayant pas bougé, le conduit 3 du manomètre M se trouve être relié à la pression atmosphérique au travers de la partie centrale du tiroir 24 et du conduit 6. Le manomètre M lit alors la pression atmosphérique qui peut être utilisée comme valeur de référence pour une recalibration. Pour maintenir l'organe de commande 10 enfoncé, l'opérateur ne doit plus que vaincre la force du ressort 12 comprimé que l'on a établi à une valeur au moins suffisante pour vaincre les forces de frottement des joints des pistons 16 et 18 lors du retour vers le haut du tiroir quand l'opérateur relâche le bouton 10. Dès que ce tiroir est revenu en position haute, la partie supérieure 40 de la chambre 45 est remise à la pression de la source d'air comprimé ce qui ramène le tiroir principal 30 en sa position "fermée" tel qu'illustré sur la figure 1a.

Lorsque l'opérateur appuie sur le bouton 20 comme illustré sur la figure 4c, le piston inférieur 28 passe devant l'embouchure du conduit 7 alors que le piston supérieur 26 se retrouve entre les embouchures des conduits 3 et 6. Comme on peut l'observer sur cette figure 4c, le manomètre M est à nouveau mis à la pression atmosphérique au travers de la partie centrale du tiroir et du conduit 7 alors que le conduit 6 est relié à l'extérieur ce qui permet à l'air contenu dans le pneumatique de s'échapper en passant au travers du conduit 2, de la chambre 45 et du conduit 6. Comme précédemment, la force d'action sur l'organe de commande 20 n'a été dépendante que de la force du ressort et des forces de friction des pistons du tiroir.

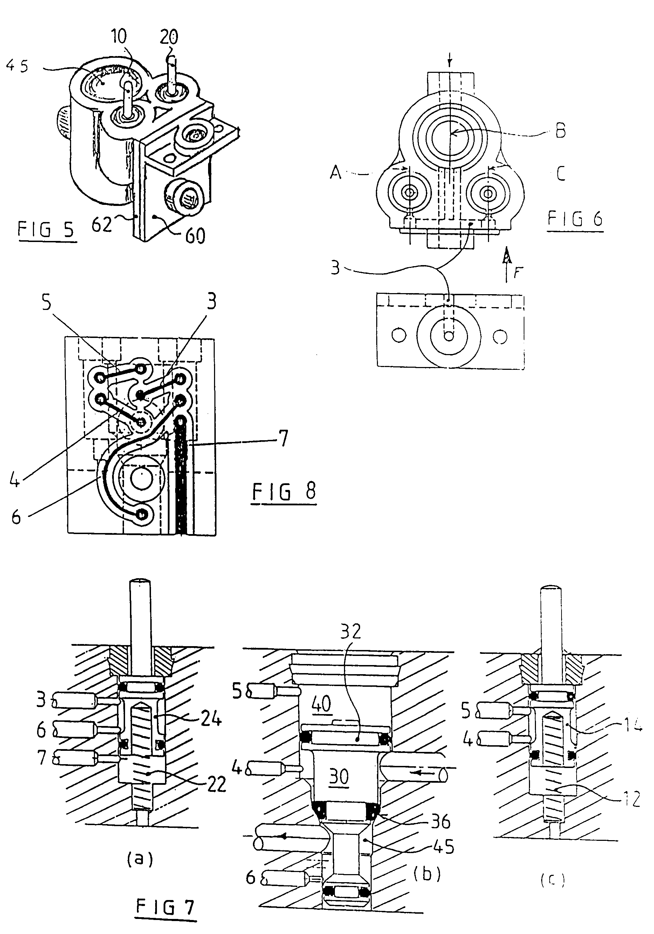

La figure 5 illustre en perspective un mode de réalisation pratique du robinet distributeur à commande séparée avec, sur la gauche, un boîtier cylindrique contenant la chambre 45 avec sa partie supérieure plus large 40 contenant le piston différentiel 32 monté sur le tiroir principal 30, et, sur la droite, deux boîtiers cylindriques plus petits et côte-à-côte contenant respectivement les tiroirs de distribution 14 et 24 dont seuls les boutons 10 et 20 sont apparents. Tout à droite, les deux boîtiers côte-à-côte sont reliés par une plaque en deux parties 60 et 62 contenant un circuit intégré pneumatique réalisant les conduits décrits précédemment.

La figure 6 est une vue du dessus du robinet distributeur tel qu'illustré sur la figure 5. Les figures 7a et 7c sont des vues en coupe verticale respectivement des tiroirs de distribution 24 et 14 selon les plans A et C de la figure 6. La figure 7b illustre en coupe verticale selon le plan B le mode de réalisation pratique du tiroir 30. La figure 8 illustre le circuit intégré pneumatique contenu dans la plaque 60,62. Outre les proportions et dimensions, la seule différence additionelle réside dans la location des ressorts 12 et 22 sous-jacents aux tiroirs de distribution 14 et 24, et non plus logés sous les boutons de commandes.

De nombreuses améliorations peuvent être apportées à ce robinet distributeur dans le cadre de l'invention selon les revendications.

## Revendications

1. Robinet distributeur pour appareil de gonflage et de dégonflage de pneumatiques comprenant
- une chambre (45) constituant un siège cylindrique dans laquelle débouchent un premier conduit (1) venant d'une source d'air comprimé, un second conduit (2) vers le pneumatique, et un troisième conduit (3,6) vers un manomètre (M),
- un tiroir principal (30) logé dans la chambre (45), ce tiroir pouvant être déplacé entre une position normalement "fermée" et une position temporaire "ouverte",
- des moyens (4/14/5, 31/33) de déplacement du tiroir (30) en position "ouverte", ainsi que des moyens (4/12/14/5, 34) de rappel du tiroir (30) en position "fermée",
caractérisé en ce que
- le tiroir principal (30) comporte trois pistons (32,36,38), les moyens de rappel du tiroir agissant sur la face externe du premier piston (32),
- en ce que dans la position "fermée" du tiroir principal (30), le second piston (36) en position intermédiaire se situe entre les embouchures des premier (1) et second (2) conduits faisant ainsi office d'obturateur,
- en ce que dans la position "ouverte" du tiroir principal (30), l'espace entre le second (36) et troisième (38) piston en aval du conduit de la source d'air comprimé, met en communication le premier et le second conduit, donc la source d'air comprimé avec le pneumatique pour gonflage, la face externe du troisième piston (38) étant à la pression atmosphérique,
- en ce que le tiroir principal (30) étant en position "fermée", l'embouchure du troisième conduit (3,6) se situe dans la chambre (45) proche du troisième piston (38),
- et en ce que l'embouchure du premier conduit (1) se situe à une distance minimum (h) du second piston intermédiaire (36) de telle sorte que le manomètre (M) lise normalement la pression du pneumatique, et que, lors d'une levée du tiroir principal (30) en direction de la position "ouverte" à l'occasion d'un gonflage, le troisième conduit (3,6) soit d'abord découvert par le troisième piston (38) pour mettre, en premier lieu, le manomètre (M) à la pression atmosphérique.

2. Robinet distributeur selon la revendication 1, caractérisé en ce que les diamètres des trois pistons (32, 36, 38) sont sensiblement identiques, en ce que la face externe du premier piston (32) est à la pression atmosphérique, en ce que les moyens de déplacement du tiroir principal (30) en position "ouverte" sont constitués d'une tige (31) prolongeant la face externe du troisième piston (38), et en ce que les moyens de rappel du tiroir (30) en position "fermée" comprennent un ressort (34) agissant entre le fond de la chambre (45) et la face externe du premier piston (32).

3. Robinet distributeur selon la revendication 1, caractérisé en ce que le premier piston (32) et sa partie de siège cylindrique (40) correspondante de la chambre (45) sont plus larges que le troisième piston (38) et sa partie de siège cylindrique correspondante, et en ce que les moyens de déplacement en position "ouverte" et de rappel en position "fermée" du tiroir principal (30) comprennent un tiroir de distribution (14) actionné grâce à un organe de commande (10) contre un moyen de rappel (12) et appliquant sur la face externe du premier piston (32) au travers d'un conduit interne (5) soit, au repos, la pression de la source d'air comprimé pour maintenir le tiroir principal (30) en position "fermée"; soit, actionné, la pression atmosphérique pour provoquer une levée du tiroir principal (30) en une position "ouverte".

4. Robinet distributeur selon l'une des revendications précédentes, dans la chambre (45) duquel débouchent le troisième conduit (3,6) vers un manomètre (M) et un quatrième conduit (7,6) d'échappement à la pression atmosphérique normalement fermé par des seconds moyens mécaniques caractérisé en ce que le troisième conduit vers le manomètre (M) et le quatrième conduit d'échappement ont une partie commune (6) allant de la chambre (45) jusqu'aux seconds moyens mécaniques, et en ce que les seconds moyens mécaniques comprennent un tiroir de distribution (24) actionné grâce à un organe de commande (20) contre un moyen de rappel (22), lequel tiroir de distribution, au repos, relie la partie commune (6) au conduit (3) du manomètre (M) complètant ainsi le troisième conduit, et qui, actionné, isole et met séparément à la pression atmosphérique le conduit (3) du manomètre (M) et la partie commune (6) en tant que quatrième conduit d'échappement.

5. Robinet distributeur selon les revendications 3 et 4, caractérisé en ce que les deux tiroirs de distribution (14,24) sont identiques.

## Patentansprüche

1. Verteilerhahn für Luftaufpump- und Ablaßgerät für Reifen, umfassend:
- eine Kammer (45), die eine zylindrische Aufnahme darstellt, in welche eine erste Leitung (1), die von einer Druckluftquelle kommt, eine zweite Leitung (2) zu dem Reifen und eine dritte Leitung (3, 6) zu einem Manometer (M) münden,
- einen Hauptschieber (30), der in der Kammer (45) angeordnet ist, wobei dieser Schieber zwischen einer normalerweise "geschlossenen" Position und einer vorübergehend "offenen" Position verschoben werden kann,
- Mittel (4/14/5, 31/33) zum Verschieben des Schiebers (30) in die "offene" Position sowie Mittel (4/12/14/5, 34) zum Zurückschieben des Schiebers (30) in die "geschlossene" Position,
dadurch gekennzeichnet, daß
- der Hauptschieber (30) drei Kolben (32, 36, 38) aufweist, wobei die Mittel zum Zurückschieben des Schiebers auf die Außenfläche des ersten Kolbens (32) wirken,
- daß in der "geschlossenen" Position des Hauptschiebers (30) der zweite Kolben (36) in einer Zwischenposition zwischen den Mündungen der ersten (1) und zweiten (2) Leitung angeordnet ist und somit die Funktion eines Verschlusses besitzt,
- daß in der "offenen" Position des Hauptschiebers (30) der Raum zwischen dem zweiten (36) und dritten (38) Kolben stromabwärts der Leitung von der Druckluftquelle die erste und die zweite Leitung und somit die Druckluftquelle mit dem aufzupumpenden Reifen verbindet, wobei die Außenfläche des dritten Kolbens (38) atmosphärischem Druck steht,
- daß, wenn sich der Hauptschieber (30) in der "geschlossenen" Position befindet, die Mündung der dritten Leitung (3, 6) in der Kammer (45) nahe dem dritten Kolben (38) angeordnet ist,
- und daß die Mündung der ersten Leitung (1) mit einem minimalen Abstand (h) zu dem zweiten Zwischenkolben (36) derart angeordnet ist, daß das Manometer (M) normalerweise den Reifendruck abliest und daß bei einem Hub des Hauptschiebers (30) in Richtung der "offenen" Position beim Aufpumpen die dritte Leitung (3, 6) zunächst von dem dritten Kolben (38) abgedeckt wird, um zuerst das Manometer (M) auf atmosphärischen Druck zu bringen.

2. Verteilerhahn nach Anspruch 1, dadurch gekennzeichnet, daß die Durchmesser der drei Kolben (32, 36, 38) im wesentlichen identisch sind, daß die Außenfläche des ersten Kolbens (32) unter atmosphärischem Druck steht, daß die Mittel zum Verschieben des Hauptschiebers (30) in die "offene" Position aus einer Stange (31) bestehen, welche die Außenfläche des dritten Kolbens (38) verlängert, und daß die Mittel zum Zurückschieben des Schiebers (30) in die "geschlossene" Position eine Feder (34) umfassen, die zwischen dem Boden der Kammer (45) und der Außenfläche des ersten Kolbens (32) wirkt.

3. Verteilerhahn nach Anspruch 1, dadurch gekennzeichnet, daß der erste Kolben (32) und sein zylindrischer Aufnahmeteil (40), welcher der Kammer (45) zugeordnet ist, größer sind als der dritte Kolben (38) und dessen entsprechender zylindrischer Aufnahmeteil, und daß die Mittel zum Verschieben und zum Zurückschieben des Hauptschiebers (30) in die "offene" Position bzw. in die "geschlossene" Position einen Verteilerschieber (14) umfassen, der durch ein Steuerorgan (10) entgegen einem Mittel zum Zurückschieben (12) angetrieben wird und auf die Außenfläche des ersten Kolbens (32) über eine innere Leitung (5) entweder im Ruhezustand den Druck der Druckluftquelle ausübt, um den Hauptschieber (30) in "geschlossener" Position zu halten, oder im betätigten Zustand den atmosphärischen Druck ausübt, um ein Anheben des Hauptschiebers (30) in eine "offene" Position zu bewirken.

4. Verteilerhahn nach einem der vorangehenden Ansprüche, in dessen Kammer (45) die dritte Leitung (3, 6) zu einem Manometer (M) und eine vierte Ablaßleitung (7, 6) mit atmosphärischem Druck, welche normalerweise von zweiten mechanischen Mitteln verschlossen ist, münden, dadurch gekennzeichnet, daß die dritte Leitung zu dem Manometer (M) und die vierte Ablaßleitung einen gemeinsamen Abschnitt (6) aufweisen, der von der Kammer (45) zu den zweiten mechanischen Mitteln geht, und daß die zweiten mechanischen Mittel einen Verteilerschieber (24) umfassen, der durch ein Steuerorgan (20) entgegen einem Mittel zum Zurückschieben (22) angetrieben wird, welcher Verteilerschieber im Ruhezustand den gemeinsamen Abschnitt (6) mit der Leitung (3) des Manometers (M) verbindet, wodurch die dritte Leitung vervollständigt wird, und welcher im betätigten Zustand die Leitung (3) des Manometers (M) und den gemeinsamen Abschnitt (6) als vierte Ablaßleitung isoliert und getrennt unter atmosphärischen Druck setzt.

5. Verteilerhahn nach Anspruch 3 und 4, dadurch gekennzeichnet, daß die beiden Verteilerschieber (14, 24) identisch sind.

## Claims

1. A distributor tap for a tyre inflating/deflating apparatus comprising :
- a chamber (45) forming a cylindrical seat into which lead a first duct (1) coming from a source of compressed air, a second duct (2) leading to a tyre, and a third duct (3,6) leading to a manometer (M),
- a main sliding piece (30) housed in the chamber (45), this sliding piece being movable between a normally "closed" position, and a temporary "open" position,
- means (4/14/5, 31/33) for moving the sliding piece (30) to the "open" position, as well as means (4/12/14/5, 34) for biasing the sliding piece (30) to the "closed" position,
characterised in that :
- the main sliding piece (30) has three pistons (32,36,38), the means for biasing the main sliding piece acting on the external face of the first piston (32),
- in the "closed" position of the main sliding piece (30), the second piston (36) is situated in an intermediate position between the ends of the first and second ducts (1 and 2) thus forming an obturator,
- in the "open" position of the main sliding piece (30) the space between the second piston (36) and the third piston (38), downstream of the compressed air supply, places the first and the second ducts in communication, hence communicating the source of compressed air with a tyre to inflate it, the external face of the third piston (38) being at atmospheric pressure,
- when the main sliding piece (30) is in the "closed" position, the end of the third duct (3,6) is situated in the chamber (45) in the proximity of the third piston (38),
- and in that the end of the first duct (1) is situated at a minimum distance (h) from the second intermediate piston (36) so that the manometer (M) normally reads the tyre pressure, and when the main sliding piece (30) is lifted in the direction of the "open" position during inflation, the third duct (3, 6) is firstly uncovered by the third piston (38) to initially place the manometer (M) at atmospheric pressure.

2. A distributor tap according to claim 1, characterized in that the diameters of the three pistons (32,36,38) are substantially the same, the external face of the first piston (32) is at atmospheric pressure, the means for moving the main sliding piece (30) to the "open" position are made of a rod (31) extending from the external face of the third piston (38), and the means for biasing the sliding piece (30) to the "closed" position comprise a spring (34) acting against the bottom end of the chamber (45) and the external face of the first piston (32).

3. A distributor tap according to claim 1, characterized in that the first piston (32) and its corresponding cylindrical seat-forming part (40) of the chamber (45) are bigger than the third piston (38) and its corresponding seat-forming part, and the means for moving the main sliding piece (30) to the "open" position and biasing it to the "closed" position comprise a sliding distribution member (14) actuated by means of a control member (10) against biasing means (12) and applying, against the external face of the first piston (32) through an internal duct (5) either, when at rest, the pressure of the compressed air source to maintain the main sliding piece (30) in the "closed" position or, when actuated, atmospheric pressure to allow the main sliding piece (30) to move up to the "open" position.

4. A distributor tap according to any one of the preceding claims, into whose chamber (45) leads the third duct (3,6) leading to a manometer (M) and a fourth duct (7,6) open to atmospheric pressure and normally closed by second mechanical means, characterized in that the third duct leading towards the manometer (M) and the fourth escape duct have a common part (6) extending from the chamber (45) to the second mechanical means, said second mechanical means comprising a sliding distribution member (24) actuated by means of a control member (20) against biasing means (22), which sliding distribution member, at rest, connects the common part (6) to the duct (3) of the manometer (M) hence completing the third duct, and which, when actuated, isolates and separately connects to atmospheric pressure the duct (3) of manometer (M) and the common part (6) acting as fourth escape duct.

5. A distributor tap according to claims 3 and 4, characterized in that the two sliding distribution members (14,24) are identical.
